# EUROPÄISCHE PATENTSCHRIFT

(11) **EP 2 117 383 B1**
(45) Veröffentlichungstag und Bekanntmachung des Hinweises auf die Patenterteilung: **15.05.2019**
(21) Anmeldenummer: 08715486.0
(22) Anmeldetag: 13.02.2008
(51) Int. Cl.: F16B 12/24, F16B 5/01, F16B 12/12, A47B 95/02, F16B 12/14, F16B 13/04, F16B 13/12

(54) **HÜLSE FÜR DECKPLATTENKLEMMUNG UND BOHRUNGSSPREIZUNG**
SLEEVE FOR COVER PANEL CLAMPING AND BORE EXPANSION
DOUILLE À BLOCAGE DE PLAQUE DE RECOUVREMENT ET EXPANSION D'ALÉSAGE

(30) Priorität: 13.02.2007 DE 102007007663
(43) Veröffentlichungstag der Anmeldung: 18.11.2009
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang
(86) Internationale Anmeldenummer: PCT/DE2008/000257
(87) Internationale Veröffentlichungsnummer: WO 2008/098564

(56) Entgegenhaltungen:
- DE-C1- 4 201 153
- DE-U1-202005 005 579
- US-A- 2 607 447
- US-A- 5 980 174
- US-B1- 6 322 305

## Beschreibung

Die Erfindung betrifft eine Spreizhülse in Kombination mit einem flächigen Bauteil, einem Befestigungselement und einem Drittelement zur Verbindung des in Stützkernbauweise gefertigten flächigen Bauteils, das zwischen einer ersten und einer zweiten Deckplatte mindestens eine Stützkernzwischenlage aufweist, mit dem Drittelement mittels eines Befestigungselements, wobei die Spreizhülse eine durchgehende Ausnehmung zum Ein- oder Hindurchstecken des im Drittmittel befestigten Befestigungselements hat.

Die flächigen Bauteile in Stützkernbauweise werden oft auch als Sandwichplatten, Wabenplatten oder Leichtbauplatten bezeichnet. Alle Plattentypen haben im Möbelbau in der Regel Decklagen aus Dünnspanplatten, mittel- oder hochdichten Faserplatten, Sperrholz- oder Hartfaserplatten. Die Sandwichplatten haben dabei als Mittelschicht bzw. Stützkern z.B. PolyurethanSchaum oder Polystyrol. Bei den Wabenplatten werden als Zwischenlagen oft Wellstegeinlagen oder sog. expandierte Honigwaben eingesetzt. Die meisten Leichtbauplatten haben eine Rohdichte, die unter 500 kg/m³ liegt. Werden für die Zwischenlage keine brandhemmenden Aluminiumschäume oder Blähglas verwendet, liegt die Rohdichte unter 350 kg/m³. Zum Vergleich beträgt die Rohdichte einer unbeschichteten Spanplatte ca. 600 bis 750 kg/m³.

Sollen an Leichtbauplatten Beschläge z.B. Griffe, Knöpfe, Knaufe oder dergleichen z.B. mittels Durchgangsschrauben befestigt werden, hat man das Problem, dass die Befestigungselemente in der Regel nur an den relativ dünnen Decklagen bzw. Deckplatten Halt finden. Das Befestigen über einfache Durchgangsschrauben ist fast unmöglich, da beim Anziehen der Stützkern zwischen den Deckplatten unter plastischer Verformung nachgibt. Die Deckplatten beulen hierbei deutlich sichtbar. Um ein Beulen zu verhindern, kann man bisher das Befestigungsmittel nur an einer der Deckplatten befestigen. U.a. aus optischen Gründen kann man dann den Stützkern und die zweite Deckplatte nur mittels einer Hülse überbrücken.

Die US-A-2 607 447 beschreibt ein Verankerungsteil, wie es z.B. in im Flugzeugbau eingesetzten Leichtbauplatten verwendet wird. Das Verankerungsteil besteht aus einer rohrförmigen Hülse, an der ein kegeliger oder zylindrischer Kopf angeformt ist. Bei der Kegelkopfvariante wird zur Aufnahme der Hülse in die obere Deckplatte eine große und in die untere Deckplatte eine kleine Bohrung gebohrt. Unterhalb der großen Bohrung wird der Stützkern entfernt. Damit die Kegelkopfhülse eingesetzt werden kann, wird die obere Deckplatte konisch eingedellt. Die eingesetzte Kegelkopfhülse liegt auf der oberen und unteren Deckplatte auf. Eine durch die Hülse gesteckte Schraube fixiert über eine Mutter einen Träger an der Leichtbauplatte.

Die US 5 980 174 A beschreibt ein System zur Verstärkung einer Sandwichplatte aus dem Bereich des Flugzeugbaus. Die Sandwichplatte besteht aus dünnen Deckblechen, zwischen denen eine Honigwabenschicht angeordnet ist. Die formsteifen Deckbleche sind aus Plastik, Fieberglas oder Metall hergestellt. Um beide Deckbleche miteinander zu verschrauben, wird zwischen den Deckblechen eine Hülse eingesetzt. Die Hülse hat genau die Länge, die der Dicke der Honigwabenschicht entspricht. Durch das Einsetzen eines Teilellipsoids in die Hülse, der Teilellipsoid kann ein separates Teil oder ein Abschnitt einer Befestigungsschraube sein, wird die Hülse unterhalb des oberen Deckbleches aufgeweitet. Die Hülse stützt sich dadurch sowohl am unteren als auch am oberen Deckblech nur über ihre Stirnseiten ab.

Der vorliegenden Erfindung liegt das Problem zugrunde, eine Hülse für Leichtbauplatten zu entwickeln, die bei einfacher Montage ein festes, sicheres und dauerhaft haltendes Befestigen an einer Leichtbauplatte ermöglicht.

Das Problem wird mit den Merkmalen des Anspruchs 1 gelöst. Dazu weist die Leichtbauplatte eine gestufte Ausnehmung zur Aufnahme der Spreizhülse auf. Die gesetzte Spreizhülse durchdringt die erste Deckplatte in einem ersten Ausnehmungsabschnitt und die Stützkernzwischenlage in einem zweiten Ausnehmungsabschnitt, um sich an der zweiten Deckplatte abzustützen. In der Abstützzone der zweiten Deckplatte setzt sich die gestufte Ausnehmung - zum Hindurchstecken des Befestigungselements - mit einem kleineren Durchmesser fort. Das Befestigungselement spreizt die Spreizhülse im Ausnehmungsabschnitt der ersten Deckplatte mittels seines kegelstumpf- oder pyramidenförmigen Kopfes oder mittels eines zwischengeschalteten kegelstumpf- oder pyramidenförmigen Keilelements zumindest bereichsweise elastisch oder plastisch verformend. Der obere Bereich der Spreizhülse oder des Grundkörpers, der an der Wandung des ersten Ausnehmungsabschnitts der gestuften Ausnehmung durch Aufweiten zur Anlage kommt, weist eine zumindest in Hülsenlängsrichtung rutschfeste Struktur auf.

Die Hülse ist ein Bauteil, das aus einem im Wesentlichen rohrförmigen Grundkörper besteht, der eine plane, untere und eine kegelstumpfförmige, obere Stirnfläche aufweist, wobei die gedachte Spitze der kegelstumpfförmigen Stirnfläche im Hülseninneren auf der Hülsenmittellinie liegt und das im Bereich der kegelstumpfförmigen Stirnfläche in radialer Richtung elastisch oder plastisch verformbar und/oder längsgeschlitzt ist.

Mit der vorliegenden Erfindung wird eine Hülse geschaffen, mit der Beschlagteile oder andere Möbelteile mit einer Leichtbauplatte verbunden werden können. Die Beschlagteile und die Möbelteile werden hierbei mittels Durchgangsschrauben, z.B. Maschinenschrauben oder Holzschrauben, an der jeweiligen Leichtbauplatte befestigt. Die einzelne Durchgangsschraube liegt nach der Montage mit ihrem Kopf direkt oder indirekt an der Leichtbauplatte an, während der tragende Gewindeanteil der Durchgangsschrauben in den Beschlagteilen bzw. den Möbelteilen eingeschraubt ist.

Ggf. können anstelle der Schrauben auch Nägel oder Nieten verwendet werden.

Weitere Einzelheiten der Erfindung ergeben sich aus den Unteransprüchen und den nachfolgenden Beschreibungen schematisch dargestellter Ausführungsformen.
- Figur 1:: In eine Leichtbauplatte eingesetzte Spreizhülse mit einer Schraube und einem Griff vor der Griffbefestigung;
- Figur 2:: Vergrößerung von Detail zu Figur 1, jedoch ohne Schraube;
- Figur 3:: wie Figur 1, jedoch nach der Griffbefestigung;
- Figur 4:: Vergrößerung von Detail zu Figur 3;
- Figur 5:: In eine Leichtbauplatte eingesetzte Spreizhülse mit einer Schraube zur Verschraubung mit einer anderen Platte;
- Figur 6:: wie Figur 5, jedoch nach der Plattenbefestigung;
- Figur 7:: wie Figur 6, jedoch um 90° gedreht und ohne Leichtbauplattenkern;
- Figur 8:: wie Figur 1, jedoch mit anderer Spreizhülse und Schraube;
- Figur 9:: Vergrößerung von Detail aus Figur 8;
- Figur 10:: wie Figur 9, jedoch nach der Griffbefestigung;
- Figur 11:: Vergrößerung von Detail aus Figur 10;
- Figur 12:: Spreizhülse mit zwei umlaufenden Rippen;
- Figur 13:: Spreizhülse mit zwei umlaufenden Rippen unterschiedlicher Flankenneigung;
- Figur 14:: Spreizhülse mit zwei Noppenreihen;
- Figur 15:: Draufsicht zu Figur 14;
- Figur 16:: Spreizhülse mit sich verbreiternden Längsrippen;
- Figur 17:: Draufsicht zu Figur 16;
- Figur 18:: Spreizhülse mit steiler Senkung.

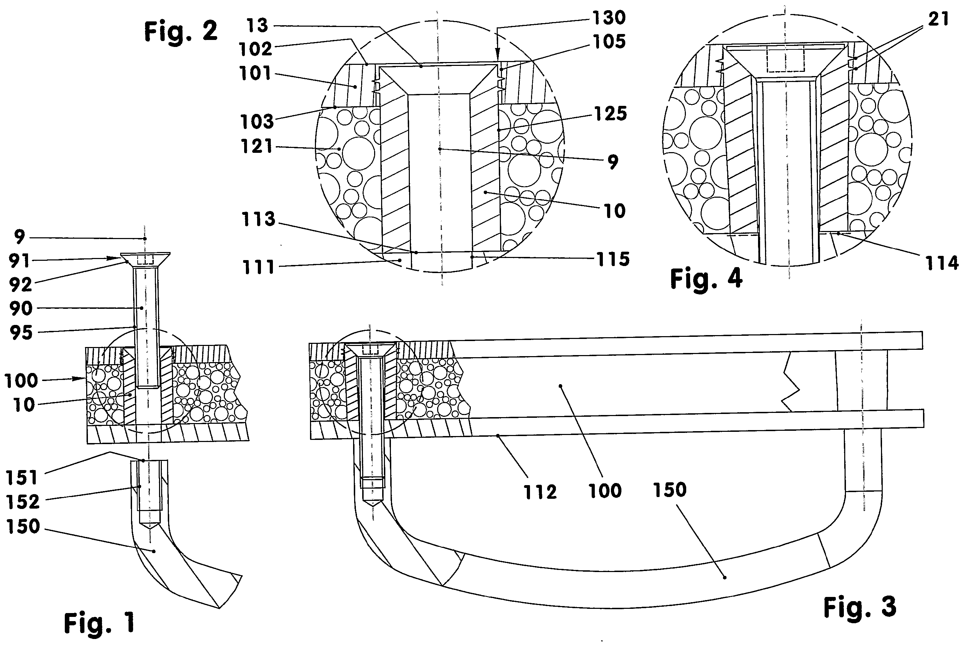

Die Figur 1 zeigt im Schnitt eine Leichtbauplatte (100) mit einer eingesteckten Spreizhülse (10). In die Spreizhülse (10) wird ein Befestigungsmittel (90) z.B. eine Schraube eingesteckt, um sie in das Gewinde (152) eines Drittelements (150), z.B. eines Griffes, einzudrehen. In der Figur 3 ist die Leichtbauplatte (100) mit dem montierten Griff (150) dargestellt.

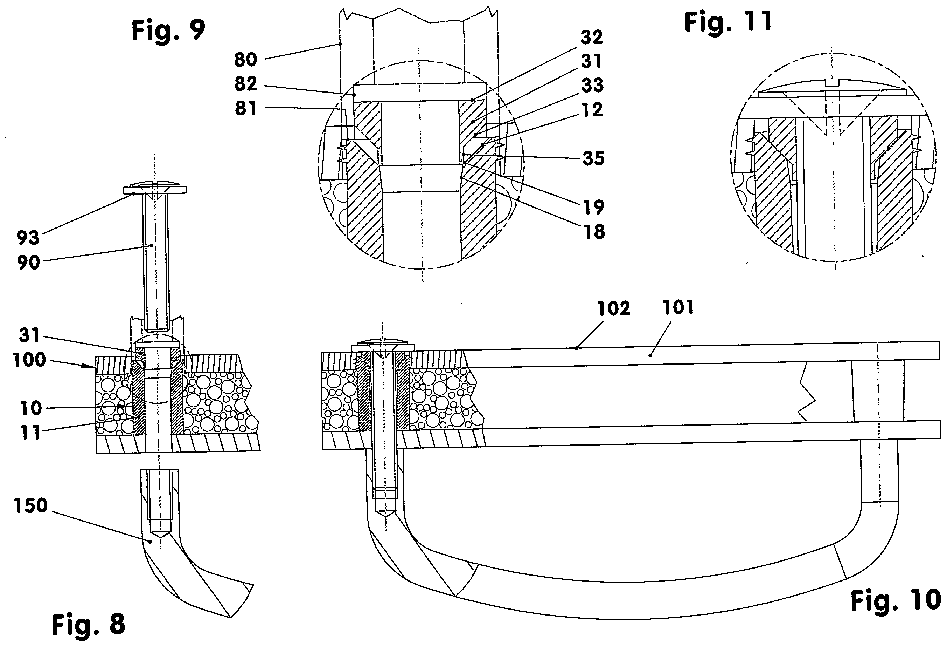

In Figur 2 ist in einer Detailvergrößerung zu Figur 1 eine Spreizhülse (10) in einer Leichtbauplatte (100) dargestellt, vgl. auch Figur 11. Die Leichtbauplatte (100) umfasst zwei Deckplatten (101) und (111) und einen dazwischen liegenden Stützkern (121). Jede Deckplatte (101, 111) besteht im Ausführungsbeispiel aus einer Dünnspanplatte. Die obere Deckplatte (101) hat als Ausnehmungsabschnitt (105) z.B. eine große zylindrische Bohrung, während die untere Deckplatte (111) nur eine kleine zylindrische Bohrung (115) aufweist. Der Durchmesser der Bohrung (105) ist z.B. ca. doppelt so groß wie der Durchmesser der Bohrung (115).

Der Stützkern (121) ist hier z.B. ein PU-Schaumkern. Er hat als Ausnehmungsabschnitt (125) z.B. auch eine Bohrung, deren Durchmesser hier dem Durchmesser der Bohrung (105) entspricht. Alle Bohrungen (105, 125, 115) haben eine gemeinsame Mittellinie (9). Die Deckplatten (101, 111) sind mit ihren innenliegenden Oberflächen (103, 113) mit dem plattenförmigen Stützkern (121) verklebt.

Die dargestellte Leichtbauplatte (100) hat eine Wandstärke von 15,5 Millimetern. Jede Deckplatte (101, 111) ist hier 2,95 Millimeter dick. Statt des Schaumkerns (121) kann sie u.a. auch einen Wabenkern haben.

Je nach Ausführungsform schwanken die Dicken der Leichtbauplatten (100) zwischen 14 und 90 Millimetern. Die Deckplatten (101, 111), die hier nur beispielsweise gleichstark sind, schwanken in einem Bereich von 0,4 bis 10 Millimetern. Ggf. können die Leichtbauplatten (100) auch mehrere verschiedene Stützkernlagen (121) aufweisen, wobei diese wiederum durch weitere Deckplatten getrennt sein können. Die vorliegende Erfindung ist auch für Spanplatten geeignet, u.a. für solche, die über weniger dichte Zwischenschichten verfügen.

Die noch unverformte Spreizhülse (10), vgl. Figur 2 und 11 ist hier ein zylinderrohrförmiger Grundkörper (11), der aus einem elastisch und/oder plastisch verformbaren Kunststoff, z.B. einem Polyoxymethylen, hergestellt wird. Die nutzungsbedingte Hauptverformungsrichtung verläuft quer zur Spreizhülsenmittellinie (9). In Längsrichtung, also parallel zur Mittellinie (9) ist die Spreizhülse (10) zumindest annähernd formsteif ausgebildet.

Die Spreizhülse (10) hat eine plane untere Stirnfläche (15) und eine kegelstumpfförmige obere Stirnfläche (12). Letztere ist eine Senkung. Die obere Stirnfläche (12) weist beispielsweise einen Kegelwinkel von 90 Winkelgraden auf, wie sie u.a. bei gängigen Schrauben (90) mit Senkkopf (91) verwendet wird. Die Spitze der Kegelstumpfmantelfläche liegt sowohl auf der Spreizhülsenmittellinie (9) als auch im Innenbereich der hier glatten Spreizhülsenbohrung (16). Die Rohrwandstärke des Grundkörpers (11) liegt je nach Ausführungsform zwischen 2 und 10 Millimetern.

Nach Figur 2 wird die Spreizhülse (10) in die aufgebohrte Leichtbauplatte (100) so eingesetzt, dass sie mit ihrer unteren Stirnfläche (15) auf der unteren Deckplatte (111) in einer sog. Abstützzone (114) aufliegt, vgl. Figur 4. Der obere Rand (13) der Spreizhülse (10) liegt dann auf der Höhe der außenliegenden Oberfläche (102) der oberen Deckplatte (101). In den Figuren 2 und 4 liegt der Rand (13) nur beispielhaft geringfügig unterhalb der Ebene bzw. des Niveaus der Oberfläche (102).

Ggf. ist die untere Stirnfläche (15) der Spreizhülse (10) mit einem Klebefilm oder einer klebrigen Beschichtung ausgestattet. Es kann hierbei eine Klebstoffbeschichtung, z.B. eine Mikroperlbeschichtung, sein, die ihre klebende Wirkung erst bei einem Anpressen der Stirnfläche (15) an die innenliegende Oberfläche (113) der zweiten Deckplatte (111) entfaltet.

Die Spreizhülse weist im oberen Bereich der Außenwandung, also in dem Bereich, der die Bohrung (105) der oberen Deckplatte (101) nach der Endmontage kontaktiert, eine oder mehrere Strukturen auf. Nach den Figuren 1 bis 4 und 12 sind es z.B. zwei umlaufende Rippen (21). Die Rippen (21) haben hier einen dreieckigen, z.B. gleichschenkeligen Einzelquerschnitt. Der maximale Durchmesser der Rippen (21) ist beispielsweise wenige Zehntel Millimeter größer als der Innendurchmesser der Bohrung (105). Die Flanken der Rippen (21) schließen z.B. einen Winkel von 30 Winkelgraden ein. Die Rippen (21) haben hier einen Teilungsabstand von z.B. 0,7 Millimetern.

Mit Hilfe der Rippen (21) sitzt die Spreizhülse (10) - auch ohne eine klebrige untere Stirnfläche zu haben - nach dem Einstecken verliersicher in der Leichtbauplatte (100).

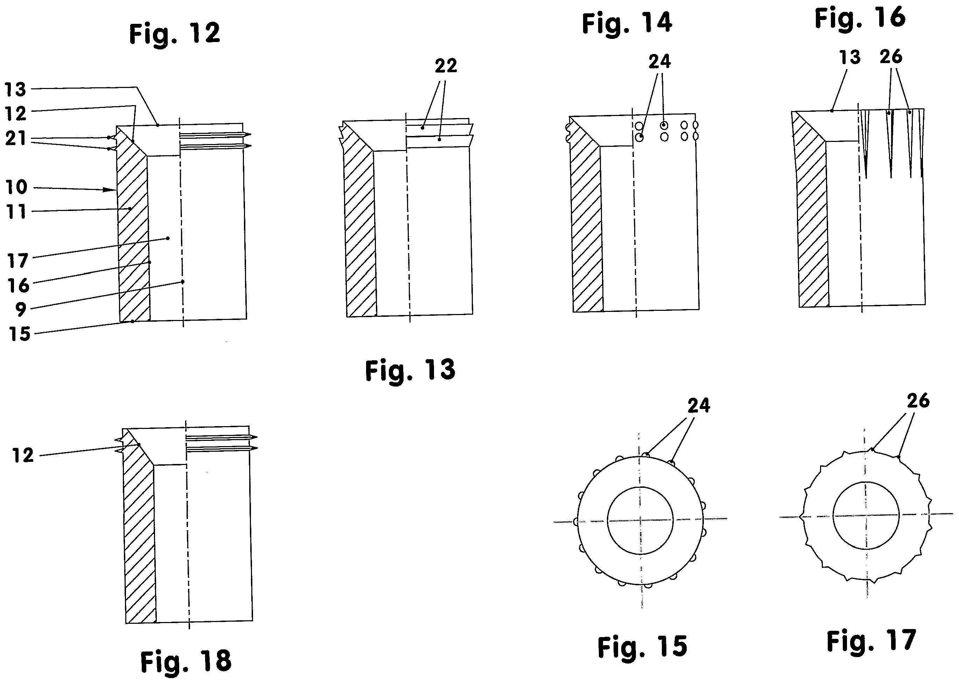

Nach der Figur 13 trägt die Spreizhülse z.B. zwei Rippen (22) mit unterschiedlichen Flankenwinkeln. Die jeweils untere Flanke ist gegenüber der Mittellinie (9) um ca. 20 Winkelgrade geneigt, während die jeweils obere Flanke mit der Mittellinie (9) einen Winkel von 90 Winkelgraden einschließt. Beide Rippen (22) liegen dicht nebeneinander. Die hier dargestellte Flankenanordnung erleichtert die Montage der Spreizhülse.

In den Figuren 14 und 15 werden Noppen (24) anstelle von Rippen (21, 22) gezeigt. Die Noppen (24) sind beispielsweise zweireihig nebeneinander an der Außenkontur angeordnet. Sie haben in Umfangsrichtung einen Abstand, der jeweils ca. der zwei- bis fünffachen Noppenfußbreite entspricht. Ggf. können die Noppen (24) auch auf einer Zick-Zack-Linie angeordnet sein. Jede Noppe (24) hat z.B. einen halbkreisförmigen Querschnitt. Andere Noppenformen, z.B. pyramiden-, kegel- oder kegelstumpfförmige, sind auch denkbar.

Die Variante nach den Figuren 16 und 17 zeigt an der Außenkontur eine Vielzahl von Längsrippen (26). Die Längsrippen (26) sind nach dem Ausführungsbeispiel ca. doppelt so lang, wie die obere Deckplatte (101) dick ist. Auf dem Umfang sind beispielsweise 15 Längsrippen äquidistant verteilt. Jede Längsrippe (26) hat z.B. einen gleichseitig umrandeten Querschnitt, der nach oben hin z.B. linear zunimmt, um am oberen Rand (13) sein Maximum zu erreichen. Diese Spreizhülse drückt - als Verdrehsicherung - bei der Montage kleine Kerben in die Wandung der Bohrung (105).

Alternativ zu den gezeigten Spreizhülsen sind Hülsen vorstellbar, deren Querschnitte vieleckige oder polygonale Außenkonturen aufweisen. Auch elliptische Querschnitte sind möglich. Vergleichbares gilt für die Bohrung (16) der Spreizhülse (10). Ggf. hat die Bohrung (16) auch ein Innengewinde.

Die Figuren 3 und 4 zeigen eine gespreizte Spreizhülse in der Gestalt, wie sie sie nach dem Einbau in einer Leichtbauplatte (100) und dem Befestigen eines Drittelements (150) in Form eines Griffes hat. Für die Montage wird die Spreizhülse in die Bohrung (130) eingesteckt und der Griff (150) mit seiner Gewindebohrung (152) vor die Bohrung (115) der unteren Deckplatte (111) gehalten. Anschließend wird eine Senkschraube (90) in die Bohrung (16) der Spreizhülse gesteckt, durch die Bohrung (115) geschoben und in die Gewindebohrung (152) des Griffes (150) eingeschraubt.

Sobald der Griff (150) mit seiner Stirnfläche (151) die äußere Oberfläche (112) der unteren Deckplatte (111) berührt, und der Kopf (91) der Senkschraube (90) sich an der Senkung (12) der Spreizhülse angelegt hat, wird zum einen die Spreizhülse gegen die untere Deckplatte (111) gepresst und zum anderen wird der obere Bereich der Spreizhülse quer zur Mittellinie gespreizt. Die Spreizwirkung ergibt sich aus dem Zusammenspiel zwischen der Senkung (12) und der Senkkopfform (92) des Schraubenkopfes (91). Die Senkung (12) und der Schraubenkopf (91) bilden ein Schiebekeilgetriebe. Durch die Einschraubbewegung wird der obere Bereich der Spreizhülse elastisch und ggf. auch plastisch gedehnt. Dabei wird er vom Schraubenkopf (91) gegen die Wandung der Bohrung (105) gepresst.

Nach dem Erreichen des erforderlichen Einschraubdrehmoments wird der Griff (150) zugleich auf zwei verschiedene Weisen in der Leichtbauplatte (100) gehalten. Zum einen wird die untere Deckplatte (111) zwischen der - in Längsrichtung unter Druckspannung stehenden - Spreizhülse und dem Griff (150) in Schraubenlängsrichtung - also axial - eingeklemmt. Zum anderen wird der obere Bereich der Spreizhülse beim Aufdehnen axial gegen die Wandung der Bohrung (105) geklemmt. Die Spreizhülse verkrallt sich, u.a. über die Rippen (21), axial in der oberen Deckplatte (101).

Wird nun der Griff (150) auf Zug belastet, so übernehmen sowohl die untere (111) als auch die obere Deckplatte (101) jeweils einen Teil der Zugkraft. Wird der Griff (150) dagegen quer zur Längsrichtung der Verschraubung belastet, stützt sich die Schraube (90) in Querrichtung über ihr Gewinde (95) an der Bohrung (115) und über den Schraubenkopf (91) an der Senkung (12) der Spreizhülse - und somit indirekt - an der Bohrung (105) ab.

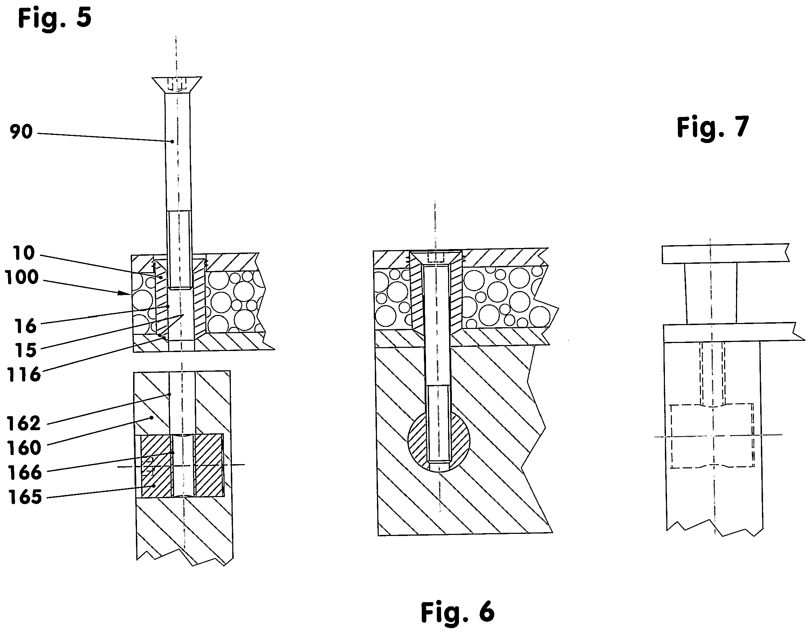

In den Figuren 5 bis 7 wird eine Spreizhülse gezeigt, über die eine Leichtbauplatte (100) mit einer querstehenden Spanplatte (160) als Drittelement in einer sog. Eckverbindung verschraubt wird. In der Spanplatte (160) ist dazu eine Querbohrung (162) vorhandenen, in der ein Querbolzen (165) mit einer querliegenden Gewindebohrung (166) eingesteckt ist. Die Gewindebohrung (166) fluchtet mit einer in der Spanplatte (160) vorhanden Querbohrung (162). Nach dem Zusammenbau der beiden Platten (100, 160) fluchtet die Bohrung (162) der Spanplatte (160) mit der Bohrung (16) der Spreizhülse (10). Die Montagekraft entsteht in der gleichen Weise wie schon zuvor im Zusammenhang mit den Figuren 1 bis 4 beschrieben.

Die Spreizhülse (10) weist hier eine Besonderheit auf. Ihre untere Stirnfläche (15) hat die Gestalt eines Kegelstumpfmantels, dessen gedachte Spitze auf der Mittellinie (9) außerhalb der Bohrung (16) liegt. Der Kegelwinkel beträgt beispielsweise 120 Winkelgrade. Die Bohrung (115) der unteren Deckplatte (111) weist eine Senkung (116) auf, die an die kegelstumpfmantelförmige Stirnfläche (15) angepasst ist.

Die Figuren 8 bis 10 zeigen u.a. eine Spreizhülse (10) mit integriertem Keilkörper (31). Auch hier wird ein Griff (150) mit Hilfe der Spreizhülse (10) an einer Leichtbauplatte (100) befestigt, allerdings mit einer Schraube (90) mit planer Auflagefläche (93) an der Kopfunterseite.

Die gezeigte Spreizhülse (10) besteht hier aus dem Grundkörper (11) und dem Keilkörper (31). Der Grundkörper (11) hat beispielsweise im Wesentlichen die Form der zuvor zu den Figuren 1 und 11 vorgestellten Spreizhülsen (10). Der Keilkörper (31) ist ein kurzes Rohrstück, das oben eine plane Stirnfläche (32) und unten eine zumindest großteils kegelstumpfmantelförmige Stirnfläche (33) hat. Diese untere Stirnfläche (33) ist nach außen gewölbt, d.h. die gedachte Spitze des Kegelstumpfmantels liegt im Bereich der Grundkörperbohrung (16). Der Kegelwinkel der unteren Stirnfläche (33) entspricht zumindest annähernd dem Kegelwinkel der oberen Stirnfläche (12) des Grundkörpers (11).

Der Keilkörper (31) ist mit dem Grundkörper (11) über einen rohrförmigen Steg (35) oder über mehrere kleine Einzelstege einteilig verbunden. Der gegenseitige Abstand der Stirnflächen (12, 33) beträgt einige Zehntel Millimeter.

Nach dem Ausführungsbeispiel aus Figur 9 hat der Grundkörper (11) im Bereich der grundkörperseitigen Anbindung des rohrförmigen Steges (35) eine Fase (18) zur Ausbildung einer dünnwandigen Sollbruchstelle (19). Im Bereich der Sollbruchstelle (19) schert der Steg (35) bei einem Zusammendrücken in Hülsenlängsrichtung am Grundkörper (11) ab, vgl. Figur 11.

Dieses Abscheren ergibt sich beim Festschrauben der Schraube (90). Hierbei legt sich die Stirnfläche (33) des Keilkörpers (31) an der Senkung (12) an und spreizt den oberen Bereich des Grundkörpers (11) auf, vgl. Figur 11. Der Keilkörper (31) entfaltet beim Anschrauben die gleiche Wirkung, wie der Senkkopf (91) der Senkschrauben (90) aus den vorherigen Ausführungsbeispielen.

Allerdings ergibt sich bei der fertig montierten Verbindung - Griff (150)/Leichtbauplatte (100) - eine zusätzliche axiale Anlage. Der Schraubenkopf (91) liegt mit seiner Planfläche (93) zusätzlich auf der äußeren Oberfläche (102) der oberen Deckplatte (101) auf.

In Figur 8 ist des Weiteren ein Dübelsetzwerkzeug (80) dargestellt. Es hat einen rohrförmigen Aufbau. Mit seiner Stirnfläche (81) liegt es zumindest bereichsweise auf einem ebenen Teil des Randes (16) der Stirnfläche (12) des Grundkörpers (11) auf, während es mit der Innenwandung seiner Bohrung (82) an der z.B. zylindrischen Außenwandung des Keilkörpers (31) anliegt. Dazu ist der Durchmesser der Außenwandung des Keilkörpers (31) geringfügig kleiner als der Außendurchmesser des Grundkörpers (11).

Mit dem Dübelsetzwerkzeug (80) kann die Spreizhülse in die Bohrung (130) eingedrückt werden, ohne die empfindliche Verbindung zwischen dem Grundkörper (11) und dem Keilkörper (31) zu beschädigen.

In der Figur 18 wird eine Spreizhülse gezeigt, deren kegelstumpfmantelförmige Stirnfläche (12) einen Kegelwinkel aufweist, der z.B. um 5 bis 25 Winkelgrade kleiner ist als der Kegelwinkel des Kopfes (91) der Senkschraube (90), vgl. Figur 1. In der Folge wird beim Befestigen des Drittelements (150, 160) der obere Bereich der Spreizhülse stärker in der Bohrung (105) verklemmt als die darunter liegenden Bereiche.

Selbstverständlich ist das Prinzip der Spreizhülse nicht auf Spreizhülsen mit zumindest bereichsweise zylindrischer Außenkontur beschränkt. Die Spreizhülse kann z.B. auch für eine Ausnehmung konstruiert werden, die einen zumindest abschnittsweise langlochförmigen oder ovalen Querschnitt hat. Ggf. hat dann die Spreizhülse zwei oder mehrere Bohrungen (16).

Auch ist es vorstellbar, dass die Spreizhülse (10) oder der Grundkörper (11) im oberen Bereich längsgeschlitzt ausgeführt wird.

### Bezugszeichenliste:

- 9: Mittellinie der Hülse

- 10: Spreizhülse, Hülse

- 11: Grundkörper
- 12: Stirnfläche, oben, kegelstumpfförmig, Senkung
- 13: Rand
- 15: Stirnfläche, unten, plan oder kegelstumpfförmig
- 16: Bohrung
- 17: Hülseninneres

- 18: Fase
- 19: Sollbruchstelle

- 21: Rippen, gleichschenkeliger Querschnitt
- 22: Rippen, unterschiedliche Flankenneigung
- 24: Noppen
- 26: Längsrippen

- 31: Keilelement, Keilkörper
- 32: Stirnfläche, oben, plan
- 33: Stirnfläche, unten, kegelstumpfförmig
- 35: Steg, rohrförmig

- 80: Dübelsetzwerkzeug
- 81: Stirnfläche
- 82: Bohrung

- 90: Befestigungselement, Schraube
- 91: Senkkopf, Schraubenkopf
- 92: Kopfform
- 93: Schraubenkopf mit flacher Auflagefläche
- 95: Schraubengewinde

- 100: Sandwichplatte, Leichtkern-Verbundplatte; flächiges Bauteil in Stützkernbauweise
- 101: Deckplatte, oben
- 102: außenliegende Oberfläche
- 103: innenliegende Oberfläche
- 105: Bohrung, Ausnehmungsabschnitt

- 111: Deckplatte, unten
- 112: außenliegende Oberfläche
- 113: innenliegende Oberfläche
- 114: Abstützzone
- 115: Bohrung, Ausnehmungsabschnitt
- 116: Senkung

- 121: Stützkern, Wabenkern, Schaumstoffkern
- 125: Bohrung, Ausnehmungsabschnitt

- 130: Gesamtbohrung, Ausnehmung

- 150: Griff, Drittelement
- 151: Stirnfläche
- 152: Gewindebohrung, Gewinde

- 160: Spanplatte, Drittelement
- 162: Querbohrung
- 165: Querbolzen
- 166: Gewindebohrung

## Patentansprüche

1. Spreizhülse (10) in Kombination mit einem flächigen Bauteil (100), einem Befestigungselement (90) und einem Drittelement (150, 160, 165) zur Verbindung des in Stützkernbauweise gefertigten flächigen Bauteils (100), das zwischen einer ersten (101) und einer zweiten Deckplatte (111) mindestens eine Stützkernzwischenlage (121) aufweist, mit dem Drittelement (150; 160, 165) mittels eines Befestigungselements (90), wobei die Spreizhülse eine durchgehende Ausnehmung (16) zum Ein- und Hindurchstecken des im Drittelement (150; 160, 165) befestigten Befestigungselements (90) hat,
- wobei das Bauteil (100) eine gestufte Ausnehmung (130) zur Aufnahme der Spreizhülse (10) aufweist,
- wobei die gesetzte Spreizhülse (10) die erste Deckplatte (101) in einem ersten Ausnehmungsabschnitt (105) und die Stützkernzwischenlage (121) in einem zweiten Ausnehmungsabschnitt (125) durchdringt, um sich an der zweiten Deckplatte (111) abzustützen,
- wobei sich in der Abstützzone (114) der zweiten Deckplatte (111) die gestufte Ausnehmung (130) - zum Hindurchstecken des Befestigungselements (90) - mit einem kleineren Durchmesser fortsetzt,
**dadurch gekennzeichnet,**
- **dass** das Befestigungselement (90) die Spreizhülse im Ausnehmungsabschnitt (105) der ersten Deckplatte (101) mittels seines kegelstumpf- oder pyramidenförmigen Kopfes (91) oder eines zwischengeschalteten kegelstumpf- oder pyramidenförmigen Keilelements (31) zumindest bereichsweise elastisch oder plastisch verformend spreizt und
- **dass** die Spreizhülse (10) im oberen Bereich, der an der Wandung des ersten Ausnehmungsabschnitts (105) der Ausnehmung (130) durch Aufweiten zur Anlage kommt, eine zumindest in Hülsenlängsrichtung rutschfeste Struktur aufweist.

2. Spreizhülse gemäß Anspruch 1, **dadurch gekennzeichnet, dass** sie aus einem im Wesentlichen rohrförmigen Grundkörper (11) besteht, der eine plane (15) und eine kegelstumpfförmige Stirnfläche (12) aufweist, wobei die gedachte Spitze der kegelstumpfmantelförmigen Stirnfläche (12) im Hülseninneren (17) auf der Hülsenmittellinie (9) liegt und die im Bereich der kegelstumpfmantelförmigen Stirnfläche (12) in radialer Richtung elastisch oder plastisch verformbar und/oder längsgeschlitzt ist.

3. Spreizhülse nach mindestens einem der voranstehenden Ansprüche, **dadurch gekennzeichnet, dass** die Spreizhülse (10) aus einem im Wesentlichen rohrförmigen Grundkörper (11) besteht.

4. Spreizhülse nach mindestens einem der voranstehenden Ansprüche, **dadurch gekennzeichnet, dass** der Grundkörper (11) eine plane (15) und eine kegelstumpfmantelförmige Stirnfläche (12) aufweist, wobei die gedachte Spitze der kegelstumpfmantelförmigen Stirnfläche (12) im Hülseninneren (17) auf der Hülsenmittellinie (9) liegt.

5. Spreizhülse nach mindestens einem der voranstehenden Ansprüche, **dadurch gekennzeichnet, dass** der Grundkörper (11) im Bereich der kegelstumpfförmigen Stirnfläche (12) in radialer Richtung elastisch verformbar ist und/oder längsgeschlitzt ist.

6. Spreizhülse gemäß dem Anspruch 1, **dadurch gekennzeichnet, dass** die Struktur aus umlaufenden Rippen (21, 22) oder einer Vielzahl von Noppen (24) besteht.

7. Spreizhülse gemäß dem Anspruch 1, **dadurch gekennzeichnet, dass** das kegelstumpf- oder pyramidenförmige Keilelement (31) an den Grundkörper (11) angeformt ist.

8. Spreizhülse gemäß dem Anspruch 7, **dadurch gekennzeichnet, dass** das angeformte Keilelement (31) über einen Steg (35) mit Sollbruchstelle (19) mit dem Grundkörper (11) verbunden ist.

## Claims

1. An expansion sleeve (10) in combination with a planar building component (100), a fastening element (90) and a third element (150, 160, 165) for connecting said planar building element (100) with the third building element (150; 160, 165) by means of a fastening element (90), said planar building element (100) configured to incorporate at least one supporting intermediate core layer (121) inserted placed between first and second cover panels (101, 111), with the expansion sleeve including a recess (16) continuously extending therethrough for the reception and passage of the fastening element (90) secured in the third element (150; 160, 165), with
- the element (100) including a stepped recess (130) for the reception of the expansion sleeve (10),
- the expansion sleeve (10), when set, penetrating the first cover panel (101) in a first section (105) of the recess and penetrating the intermediate supporting core layer (121) in a second section (125) of the recess so as to bear against the second cover plate (111), and
- the stepped recess (130) continuing with a reduced diameter in the support zone (114) of the second cover panel (111) for the passage of the fastening element (90) therethrough,
**characterized in that**
- the fastening element (90) spreads the expansion sleeve within the section (105) of the recess of the first cover panel (101) by means of a frustroconical or pyramid-shaped head (91) or by an intermediate frustroconical or pyramid-shaped wedge element (31), such spreading resulting in resilient or plastic deformation at least in parts of said section, and
- the expansion sleeve (10) has in the upper portion slip-proofing structure extending at least in the longitudinal direction thereof to engage the wall of the first section (105) of the recess (130).

2. Expansion sleeve as claimed in claim 1, **characterized in** comprising a substantially tubular basic body (11) having a planar end face (15) and a frustroconical end face (12), with the imaginary apex of the frustroconical end face (12) on the centre line (9) of the sleeve in its interior (17) and being resiliently or plastically deformable in the radial direction in the area of the frustroconical end face (12) and/or having therein a longitudinally extending slit.

3. Expansion sleeve as claimed in at least one of the preceding claims, **characterized by** consisting of a substantially tubular body (11).

4. Expansion sleeve as claimed in at least one of the preceding claims, **characterized by** the body (11) having a planar end face and a frustroconical end face (15), with the imaginary apex of the frustroconical end face (12) lying on the centre line (9) of the sleeve in the interior (17) thereof.

5. Expansion sleeve as claimed in at least one of the preceding claim, **characterized by** the body (11) being radially deformable in the area of the frustroconical end face (12) and/or having longitudinal slits therethrough in that area.

6. Expansion sleeve as claimed in claim 1, **characterized by** said structure comprising encircling ribs (21, 22) or a plurality of nobs (24).

7. Expansion sleeve as claimed in claim 1, **characterized by** the frustroconical or pyramid-shaped wedge element (31) being formed to be integral with body (11).

8. Expansion sleeve as claimed in claim 7, **characterized by** the integral wedge element (31) being connected with body (1) via a web (35) having a predetermined breaking point in it.

## Revendications

1. Cheville expansible (10) en combinaison avec un élément de construction plan (100), un élément de fixation (90) et un élément tiers (150, 160, 165), destinée à relier l'élément de construction plan (100) qui présente au moins une couche intermédiaire de renforcement (121) située entre une première plaque de recouvrement (101) et une deuxième plaque de recouvrement (111), avec l'élément tiers (150, 160, 165) au moyen d'un élément de fixation (90), la cheville expansible présentant un évidement traversant (16) qui permet l'insertion et le passage de l'élément de fixation (90) fixé dans l'élément tiers (150, 160, 165),
- l'élément de construction (100) présentant un évidement échelonné (130) destiné à recevoir la cheville expansible (10),
- la cheville expansible insérée (10) traversant la première plaque de recouvrement (101) dans une première section de l'évidement (105) et la couche intermédiaire de renforcement (121) dans une deuxième section de l'évidement (125) pour venir s'appuyer sur la deuxième plaque de recouvrement (111),
- l'évidement de forme échelonnée (130) se poursuivant dans la zone d'appui (114) de la deuxième plaque de recouvrement (111), pour le passage de l'élément de fixation (90), avec un diamètre plus petit,
**caractérisée en ce**
- **que** l'élément de fixation (90) écarte la cheville expansible dans la partie d'insertion évidée (105) de la première plaque de recouvrement (101), au moyen de sa tête de forme tronconique ou pyramidale (91) ou d'un coin de forme tronconique ou pyramidale (31) intercalé, au moins en partie de manière élastiquement ou plastiquement déformante et
- **que** la cheville expansible (10) présente une structure antidérapante au moins dans la direction longitudinale de la cheville, dans la partie supérieure qui vient s'appuyer, par l'élargissement de la cheville, contre la paroi de la première section (105) de l'évidement (130).

2. Cheville expansible selon la revendication 1, **caractérisée en ce que** la dite cheville est composée d'un corps de base (11) essentiellement tubulaire qui présente une surface frontale plane (15) et une surface frontale de forme tronconique (12), la pointe imaginaire de la surface de forme tronconique (12) se trouvant à l'intérieur de la cheville (17) sur la ligne médiane de la cheville (9), et qui est, dans la zone de la surface frontale de forme tronconique (12), déformable élastiquement ou plastiquement et/ou fendu longitudinalement dans la direction radiale.

3. Cheville expansible selon au moins une de revendications mentionnées ci-devant, **caractérisée en ce que** la cheville expansible (10) est composée d'un corps de base (11) essentiellement tubulaire.

4. Cheville expansible selon au moins une de revendications mentionnées ci-devant, **caractérisée en ce que** le corps de base (11) présente une surface frontale plane (15) et une surface frontale de forme tronconique (12) de la surface tronconique (12), la pointe imaginaire de la surface tronconique (12) se trouvant à l'intérieur de la cheville (17), sur la ligne médiane de la cheville (9).

5. Cheville expansible selon au moins une des revendications mentionnées ci-devant, **caractérisée en ce que** le corps de base (11) dans la zone de la surface frontale de forme tronconique (12) est élastiquement déformable dans la direction radiale et/ou fendu longitudinalement.

6. Cheville expansible selon la revendication 1, **caractérisée en ce que** la structure est composée de nervures périphériques (21, 22) ou d'une multitude de bourrelets (24).

7. Cheville expansible selon la revendication 1, **caractérisée en ce que** le coin de forme tronconique ou pyramidale (31) est formé sur le corps de base (11).

8. Cheville expansible selon la revendication 7, **caractérisée en ce que** le coin (31) formé sur le corps de base est relié au corps de base (11) par une nervure (35) avec point de rupture (19).
